# EUROPÄISCHE PATENTSCHRIFT

(11) **EP 3 040 836 B1**
(45) Veröffentlichungstag und Bekanntmachung des Hinweises auf die Patenterteilung: **04.11.2020**
(21) Anmeldenummer: 15150031.1
(22) Anmeldetag: 02.01.2015
(51) Int. Cl.: G06F 3/0484

(54) **Fortbewegungsmittel, Anwenderschnittstelle und Verfahren zur Reduzierung einer Lichtemission einer Anzeigeeinrichtung eines Fortbewegungsmittels**
Means of locomotion, user interface and method for reducing a light emission from a display device of a means of locomotion
Moyen de transport, interface utilisateur et procédé de réduction d'une émission de lumière d'un dispositif d'affichage d'un moyen de transport

(43) Veröffentlichungstag der Anmeldung: 06.07.2016
(73) Patentinhaber: Volkswagen AG, 38436 Wolfsburg (DE)
(72) Erfinder: Wild, Holger, 10179 Berlin (DE); Kötter, Nils, 38126 Braunschweig (DE)
(74) Vertreter: Hoefer & Partner Patentanwälte mbB

(56) Entgegenhaltungen:
- EP-A1- 1 942 401
- WO-A1-2013/179390
- US-A1- 2013 293 452
- "A New Car UI: How touch screen controls in cars should work", Youtube, 17 February 2014 (2014-02-17), page 1 pp., XP054979095, Retrieved from the Internet: URL:https://www.youtube.com/watch?v=XVbuk3 jizGM [retrieved on 2019-02-01]

## Beschreibung

### Stand der Technik

Die vorliegende Erfindung betrifft ein Fortbewegungsmittel, eine Anwenderschnittstelle sowie ein Verfahren zur Reduzierung einer Lichtemission einer Anzeigeeinrichtung. Insbesondere betrifft die vorliegende Erfindung eine Möglichkeit zur Unterscheidung unterschiedlicher zu aktivierender Zustände reduzierter Lichtemissionen einer gattungsgemäßen Anzeigeeinrichtung.

In aktuellen Fahrzeugen, insbesondere Automobile, werden vermehrt Bildschirme eingesetzt, auf welchen wahlfreie Inhalte zur Anzeige von Informationen und Entgegennahme diesbezüglicher Anwendereingaben angezeigt werden können. Diese schütten bei nächtlichen Fahrten selbst dann sichtbares Licht aus, wenn der Bildschirm "schwarz" ist beziehungsweise ein schwarzes Bild anzeigt. Dies liegt daran, dass die Bildschirme zur Verbesserung des Kontrastes und Erhöhung der Sichtbarkeit bei hoher Umgebungslichtintensität ein sogenanntes "Backlight" (dt. "Hintergrundbeleuchtung") aufweisen, dessen Licht durch die abgedunkelten Pixel des Bildschirmes nur unvollständig abgeschirmt wird. Insbesondere für den Fall, dass mehrere Bildschirme innerhalb des Fortbewegungsmittels als Bestandteile einer Anwenderschnittstelle vorgesehen sind, bieten sich unterschiedliche Möglichkeiten, die Gesamtlichtemission der Bildschirme zu reduzieren. Beispielsweise kann ein einzelner Bildschirm in einen Zustand reduzierter Lichtemission versetzt werden. Alternativ können mehrere oder andere Bildschirme in einen solchen Zustand versetzt werden.

DE 10 2012 008 681 A1 offenbart eine Multifunktions-Bedieneinrichtung für ein Kraftfahrzeug, welche eine Fingerleiste in Form einer länglichen Führungsmulde aufweist, durch welche ein Anwender Wischgesten unter mechanischer Führung seines Fingers ausführen und zur Bedienung einer Anwenderschnittstelle verwenden kann.

WO 2011/026558 A1 offenbart ein Verfahren zum Bedienen eines Elektrofahrzeuges, bei welchem im Ansprechen auf das Einstecken einer Anwenderkennung ("Fahrzeugschlüssel") ein Schieberegler ("Slider") erscheint, welcher zur Fahrfreigabe durch einen Anwender in einer vordefinierten Richtung zu betätigen ist.

WO 2013/179390 A1 offenbart eine Anwenderschnittstelle für ein Fortbewegungsmittel, welche eine Wischgeste zum Reduzieren einer Lichtemission einer Anzeigeeinrichtung vorsieht.

EP 1 942 401 A1 offenbart eine graphische Anwenderschnittstelle, in welcher ein Schieberegler zur Anpassung der Bildschirmhelligkeit vorgesehen ist. Der Schieberegler wird auf einer berührungsempfindlichen Anzeigefläche dargestellt und durch eine Wischgeste unter Kontakt mit dem Finger eines Anwenders bedient.

"A New Car UI: How touch screen controls in cars should work", https://www.youtube.com/watch?v=XVbuk3jizGM offenbart eine Anwenderschnittstelle für die Bedienung von Fahrzeugfunktionen, bei welcher in Abhängigkeit einer Anzahl auf eine touch-sensitive Oberfläche aufgelegter Finger die Funktion, welche mittels einer anschließend ausgeführten Wisch-Geste beeinflusst wird, definiert wird.

Der vorstehend identifizierte Stand der Technik stellt zur Aktivierung von Zuständen reduzierter Lichtemissionen für in einem Fortbewegungsmittel verbaute Anzeigeeinrichtungen keine geeigneten Gegenstände bereit. Es ist daher eine Aufgabe der vorliegenden Erfindung, einem Anwender eine geeignete Abfolge von Bedienschritten bereitzustellen, mittels welcher er für eine Anzeigeeinrichtung eines Fortbewegungsmittels einen Betriebszustand reduzierter Lichtemissionen aktivieren kann.

### Offenbarung der Erfindung

Die vorstehend identifizierte Aufgabe wird erfindungsgemäß durch die Gegenstände der unabhängigen Ansprüche gelöst. Die Unteransprüche zeigen bevorzugte Weiterbildungen der Erfindung.

Die Longpress-Geste wird mittels einer Fingerleiste zur Eingabe von Wischgesten empfangen. Solche Fingerleisten können kapazitive Antennen beziehungsweise Sensoren aufweisen, über welche unterschiedliche Positionen eines Fingers oder mehrere Finger eines Anwenders auf benachbarten Positionen aufgelöst werden können. Insbesondere kann die Longpress-Geste auch als berührende Eingabe auf einer Fingerleiste empfangen werden, wie sie beispielsweise in der eingangs genannten Druckschrift DE 10 2012 008 681 A1 beschrieben ist. Auch von der Anmelderin der vorliegenden Erfindung wurde unter dem Aktenzeichen DE 13166985 ein entsprechendes Eingabeinstrument eingereicht, dessen Gegenstand, sofern für die Zwecke der vorliegenden Erfindung verwendbar, ausdrücklich in die vorliegende Beschreibung einbezogen zu verstehen ist. Mit anderen Worten wird die Longpress-Geste bevorzugt als berührende Eingabe als der in den vorstehenden Referenzen genannten Fingerleisten ausgeführt. Entsprechendes gilt für die erfindungsgemäß vorgeschlagene vordefinierte Wischgeste. Dies schließt jedoch nicht aus, dass die Wischgeste durch eine auf einer Anzeigeeinrichtung angezeigte Animation und/oder durch eine zur Position der verwendeten Finger des Anwenders korrespondierende Lichtausschüttung begleitet werden kann. Die vorgeschlagene Fingerleiste ermöglicht eine im Wesentlichen "blinde" Bedienung durch den Anwender, da sie eine haptische Vorzugsposition für den Finger des Anwenders darstellt. Auf diese Weise kann die Verkehrssicherheit bei der Durchführung des erfindungsgemäßen Verfahrens weiter erhöht werden.

Die Wischgeste kann eine Ein-Finger-Wischgeste oder eine Mehr-Finger-Wischgeste sein. Durch unterschiedliche Wischgesten kann - wie nachfolgend eingehender diskutiert wird - eine Aktivierung eines ersten Zustandes reduzierter Lichtemission von einer Aktivierung eines zweiten Zustandes reduzierter Lichtemission (z. B. als "Ruhezustand" beziehungsweise als "ausgeschalteter Zustand" bezeichnet) unterschieden werden. Selbst unter Verwendung ein und desselben, lediglich eindimensional zu bedienenden Eingabeinstrumentes können somit erfindungsgemäß unterschiedliche Zustände reduzierter Energieaufnahmen aktiviert werden.

Gemäß einem zweiten Erfindungsaspekt wird die vorstehend identifizierte Aufgabe durch eine Anwenderschnittstelle zur Reduzierung einer Lichtemission einer Anzeigeeinrichtung eines Fortbewegungsmittels gelöst. Die Anwenderschnittstelle umfasst eine Erfassungseinrichtung zur Erfassung von Anwendereingaben, eine Anzeigeeinrichtung (wobei weitere Anzeigeeinrichtungen explizit nicht ausgeschlossen werden) und eine Auswerteeinheit, welche beispielsweise einen programmierbaren Prozessor, insbesondere in Form eines Mikrocontrollers, eines Nanocontrollers o. ä. ausgestaltet sein kann. Die Auswerteeinheit ist eingerichtet, eine mittels einer Fingerleiste der Erfassungseinrichtung erfasste Anwendereingabe mit einer vordefinierten Mindestdauer (englisch "Longpress", z.B. im Bereich einer Dauer im Bereich von 1, 2 oder 3 Sekunden) zu erkennen. Die Erfassungseinrichtung umfasst gemäß dem vorstehend identifizierten erfindungsgemäßen Verfahren eine Fingerleiste. Weitere und/oder andere Wirkprinzipien seien für die erfindungsgemäße Erfassungseinrichtung explizit nicht ausgeschlossen. Nach der Erkennung der Longpress-Geste wird mittels der Fingerleiste der Erfassungseinrichtung eine Wischgeste erfasst und von der Auswerteeinheit erkannt beziehungsweise interpretiert und mit vordefinierten Referenzen abgeglichen. Im Ansprechen auf einen erfolgreichen Abgleich wird eine Lichtemission der Anzeigeeinrichtung des Fortbewegungsmittels durch die Auswerteeinheit reduziert. Mit anderen Worten wird nach den in Verbindung mit dem vorstehend beschriebenen erfindungsgemäßen Verfahren zumindest eine Anzeigeeinrichtung der Anwenderschnittstelle in einen abgedunkelten beziehungsweise energetisch reduzierten Betriebszustand versetzt. Die Merkmale, Merkmalskombinationen und die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

Die Erfassungseinrichtung umfasst also eine Fingerleiste zur Erfassung von Longpress-Gesten und/oder Wischgesten. Eine solche Eingabeeinrichtung ermöglicht im Wesentlichen eine blinde Bedienung durch den Anwender, wodurch die Verkehrssicherheit bei der Bedienung einer erfindungsgemäßen Anwenderschnittstelle während der Wahrnehmung der Fahraufgabe bestmöglich erhalten bleibt.

Die Lichtemissionen können beispielsweise durch Aktivieren eines Ruhezustandes oder eines ausgeschalteten Zustandes der Anzeigeeinrichtung und/oder einer zweiten Anzeigeeinrichtung reduziert werden. Mit anderen Worten wird mindestens eine Anzeigeeinrichtung in einen erfindungsgemäß vorgesehenen Zustand reduzierter Lichtemissionen versetzt, nachdem die vorgesehenen Bedienschritte erfasst wurden.

Bevorzugt kann im Ansprechen auf ein Erfassen einer ersten vordefinierten Wischgeste ein Ruhezustand und im Ansprechen auf ein Erfassen einer zweiten vordefinierten Wischgeste ein ausgeschalteter Zustand aktiviert werden. Mit anderen Worten kann die Lichtemission beziehungsweise die Energieaufnahme der Anwenderschnittstelle im Ansprechen auf das Erfassen der ersten vordefinierten Wischgeste in einem ersten Umfang reduziert werden und im Ansprechen auf das Erfassen der zweiten vordefinierten Wischgeste in einem zweiten Umfang reduziert werden, wobei der erste Umfang und der zweite Umfang unterschiedlich starke Reduzierungen der Lichtemissionen beziehungsweise der Energieaufnahmen bewirken.

Im Ansprechen auf die Longpress-Geste wird ein erster Hinweis über eine Zuordnung zwischen einer ersten Wischgeste und einem ersten Zustand reduzierter Lichtemissionen angezeigt. Mit anderen Worten wird dem Anwender im Ansprechen auf die Longpress-Geste die Möglichkeit, den ersten Zustand reduzierter Lichtemissionen mittels der ersten Wischgeste zu aktivieren optisch veranschaulicht. Entsprechendes gilt für eine Zuordnung zwischen einer zweiten Wischgeste und einem zweiten Zustand reduzierter Lichtemissionen durch einen zweiten Hinweis. Beide Hinweise können als Schieberegler beziehungsweise "Slider" ausgestaltet sein bzw. einen solchen umfassen, welche beispielsweise auf einer Anzeigeeinrichtung angezeigt werden. Einem jeden Slider kann ein Hinweis beigefügt sein, dass eine Wischgeste mit einer vordefinierten Anzahl von Fingern ("Multitouch-Geste") einen dem Slider zugeordneten Zustand reduzierter Lichtemissionen aktiviert. Insbesondere für den Fall, dass der Anwender sich entschließt, die vordefinierte Wischgeste über eine eindimensionale Eingabevorrichtung wie z. B. eine Fingerleiste oder in Form einer 3D-Wischgeste einzugeben, kann über die Anzahl der verwendeten Finger eine Unterscheidung des zu aktivierenden Zustandes erfolgen. Sofern der erste Hinweis und/oder der zweite Hinweis auf einer berührungsempfindlichen Eingabe/Anzeigeeinrichtung angezeigt werden, kann selbstverständlich eine Position der vordefinierten Wischgeste darüber entscheiden, welcher Betriebszustand reduzierter Lichtemissionen aktiviert wird.

Der den Slidern zugeordnete Hinweis kann beispielsweise ein jeweiliges Icon beziehungsweise Piktogramm umfassen, welches im Falle des ersten Hinweises eine Hand mit lediglich einem ausgestreckten Finger (z. B. der Zeigefinger) und im Falle des zweiten Hinweises eine Hand mit mindestens zwei ausgestreckten Fingern (z.B. Zeige- und Mittelfinger) umfasst. Auf diese Weise kann auf eine Verwendung von Hinweisen in Textform und ein entsprechendes Übersetzungserfordernis für unterschiedliche Länder verzichtet werden.

Unabhängig von einer durch den Anwender gewählten Anwenderschnittstelle zur Eingabe der vordefinierten Wischgeste kann eine Animation des Sliders darüber Gewissheit geben, welcher Betriebszustand reduzierter Lichtemissionen bei Vollendung der aktuell ausgeführten Wischgeste aktiviert wird. Werden beispielsweise zwei Slider auf einer Anzeigeeinheit angezeigt, von welchen der erste einen Ruhezustand und der zweite einen ausgeschalteten Zustand aktiviert, kann ein Indikator über eine aktuelle Sliderposition darüber Auskunft geben, welcher der beiden Slider derzeit bedient wird. Auf diese Weise kann vermieden werden, dass der Anwender im Unklaren darüber ist, auf welchen Zustand reduzierter Lichtemissionen die aktuell ausgeführte Wischgeste hinwirkt.

Gemäß einem dritten Aspekt der vorliegenden Erfindung wird ein Computerprogrammprodukt vorgeschlagen, welches Instruktionen umfasst, welche, wenn sie auf einer Auswerteeinheit einer Anwenderschnittstelle gemäß dem zweitgenannten Erfindungsaspekt ausgeführt werden, die Anwenderschnittstelle veranlassen, die Schritte eines Verfahrens gemäß dem erstgenannten Erfindungsaspekt auszuführen. Das Computerprogrammprodukt kann als CD, DVD, Blue-Ray-Disc, Flash-Speicher, Festplatte, RAM/ROM, Cashe etc. ausgestaltet sein.

Gemäß einem vierten Aspekt der vorliegenden Erfindung wird eine Signalfolge repräsentierend Instruktionen vorgeschlagen, welche einen Prozessor einer Auswerteeinheit einer Anwenderschnittstelle gemäß dem zweigenannten Erfindungsaspekt veranlassen beziehungsweise in die Lage versetzen, die Anwenderschnittstelle für die Ausführung eines Verfahrens gemäß dem erstgenannten Erfindungsaspekt einzurichten. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittel (z. B. ein Fahrzeug, ein PKW, ein Transporter, ein LKW, ein Motorrad, ein Luft- und/oder Wasserfahrzeug) vorgeschlagen, welches eine Anwenderschnittstelle gemäß dem zweitgenannten Erfindungsaspekt umfasst. Dabei kann die Anwenderschnittstelle insbesondere für den Führer des Fortbewegungsmittels vorgesehen sein, mittels welcher der Führer während der Führung des Fortbewegungsmittels mit dem Fortbewegungsmittel und seinen technischen Einrichtungen kommunizieren kann. Die Merkmale, Merkmalskombinationen so wie die sich aus diesen ergebenden Vorteile entsprechen für den dritt-, viert- und fünftgenannten Aspekt der vorliegenden Erfindung dem in Verbindung mit dem erst- und zweitgenannten Erfindungsaspekt Ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Übersicht über Komponenten eines Ausführungsbeispiels eines erfindungsgemäßen Fortbewegungsmittels mit einem Ausführungsbeispiel einer erfindungsgemäßen Anwenderschnittstelle;
- Figur 2: eine Veranschaulichung eines ersten Bedienschrittes eines Anwenders bezüglich eines Ausführungsbeispiels einer erfindungsgemäßen Anwenderschnittstelle;
- Figur 3: eine Veranschaulichung eines zweiten Bedienschrittes eines Anwenders bezüglich eines Ausführungsbeispiels einer erfindungsgemäßen Anwenderschnittstelle;
- Figur 4: eine Veranschaulichung eines dritten Bedienschrittes eines Anwenders bezüglich eines Ausführungsbeispiels einer erfindungsgemäßen Anwenderschnittstelle;
- Figur 5: eine Veranschaulichung eines vierten Bedienschrittes eines Anwenders bezüglich eines Ausführungsbeispiels einer erfindungsgemäßen Anwenderschnittstelle;
- Figur 6: eine Veranschaulichung eines fünften Bedienschrittes eines Anwenders bezüglich eines Ausführungsbeispiels einer erfindungsgemäßen Anwenderschnittstelle;
- Figur 7: eine Veranschaulichung eines sechsten Bedienschrittes eines Anwenders bezüglich eines Ausführungsbeispiels einer erfindungsgemäßen Anwenderschnittstelle;
- Figur 8: eine Veranschaulichung eines siebten Bedienschrittes eines Anwenders bezüglich eines Ausführungsbeispiels einer erfindungsgemäßen Anwenderschnittstelle;
- Figur 9: eine Veranschaulichung eines achten Bedienschrittes eines Anwenders bezüglich eines Ausführungsbeispiels einer erfindungsgemäßen Anwenderschnittstelle;
- Figur 10: eine Veranschaulichung eines neunten Bedienschrittes eines Anwenders bezüglich eines Ausführungsbeispiels einer erfindungsgemäßen Anwenderschnittstelle;
- Figur 11: eine Veranschaulichung eines zehnten Bedienschrittes eines Anwenders bezüglich eines Ausführungsbeispiels einer erfindungsgemäßen Anwenderschnittstelle;
- Figur 12: eine Veranschaulichung eines elften Bedienschrittes eines Anwenders bezüglich eines Ausführungsbeispiels einer erfindungsgemäßen Anwenderschnittstelle;
- Figur 13: eine Veranschaulichung eines zwölften Bedienschrittes eines Anwenders bezüglich eines Ausführungsbeispiels einer erfindungsgemäßen Anwenderschnittstelle;
- Figur 14: eine Veranschaulichung eines 13. Bedienschrittes eines Anwenders bezüglich eines Ausführungsbeispiels einer erfindungsgemäßen Anwenderschnittstelle;
- Figur 15: eine Veranschaulichung eines 14. Bedienschrittes eines Anwenders bezüglich eines Ausführungsbeispiels einer erfindungsgemäßen Anwenderschnittstelle; und
- Figur 16: ein Flussdiagramm veranschaulichend Schritte eines Ausführungsbeispiels eines erfindungsgemäßen Verfahrens.

### Ausführungsformen der Erfindung

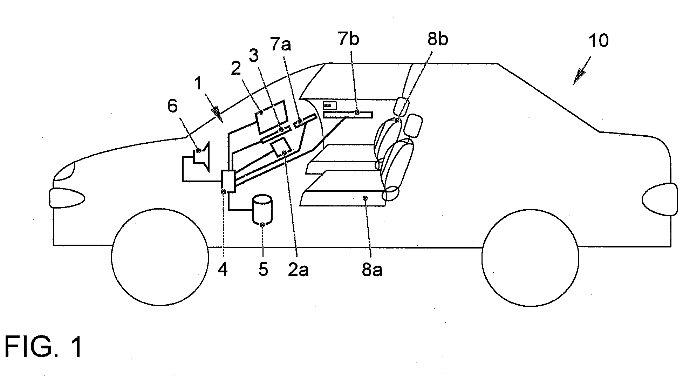

Figur 1 zeigt einen PKW 10 als Fortbewegungsmittel, in welchem ein Ausführungsbeispiel einer erfindungsgemäßen Anwenderschnittstelle 1 angeordnet ist. Die Anwenderschnittstelle 1 umfasst einen ersten (größeren) Bildschirm 2 mit einer berührungsempfindlichen Oberfläche (nicht dargestellt) und einen unterhalb des Bildschirms 2 angeordneten (kleineren) Bildschirm 2a mit einer (nicht dargestellten) berührungsempfindlichen Oberfläche. Beide sind informationstechnisch mit einem elektronischen Steuergerät 4 als Beispiel für eine Auswerteeinheit verbunden. Zwischen den Bildschirmen 2, 2a ist eine Fingerleiste 3 umfassend eine (in der Übersicht nach Figur 1 nicht separat dargestellte) Annäherungssensorik in Form einer Infrarot-LED-Leiste vorgesehen und an das elektronische Steuergerät 4 angeschlossen. Ambientelichtleisten 7a, 7b sind in das Armaturenbrett des PKW 10 beziehungsweise in dessen Türen eingelassen und können von dem elektronischen Steuergerät 4 mit Signalen zur Lichtausschüttung angesteuert werden. Ein Datenspeicher 5 als Beispiels eines Computerprogrammproduktes ist zur Bereithaltung erforderlichen Programmcodes und insbesondere von Referenzen für vordefinierte Anwendereingaben (Longpress- und Wischgesten) vorgesehen und ebenso wie ein Lautsprecher 6 zur Ausgabe von Quittier- und Hinweistönen an den Anwender informationstechnisch mit dem elektronischen Steuergerät 4 verbunden. Auf einem Fahrersitz 8a und einem Beifahrersitz 8b können Anwender der Anwenderschnittstelle 1 Platz nehmen, während sie wie beispielhaft anhand der nachfolgenden Figuren beschrieben mit dieser interagieren.

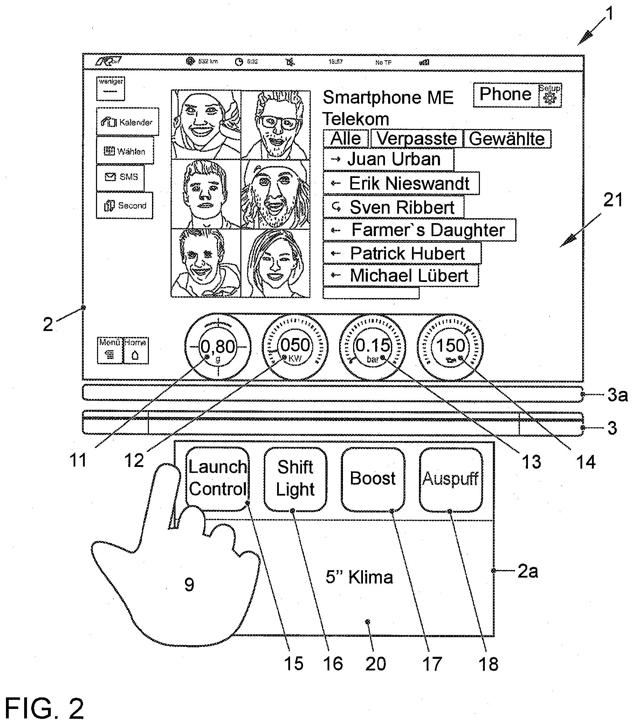

Figur 2 zeigt einen Bildschirminhalt 21 auf einem Bildschirm 2 der Anwenderschnittstelle, welcher neben Telefoniefunktionen und Kontaktbucheinträgen auch Anzeigeelemente 11, 12, 13, 14 nach Art analoger Armaturen repräsentierend eine Beschleunigung, eine Leistungsaufnahme, einen Ladedruck und eine Kühlmitteltemperatur des Fortbewegungsmittels zeigt. Unterhalb des Bildschirms 2 ist eine Annäherungssensorik in Form einer Infrarot-LED-Leiste 3a angeordnet, mittels welcher frei im Raum ausgeführte Gesten (3D-Gesten) erfasst und in korrespondierende Informationssignale gewandelt werden können. Unterhalb der Infrarot-LED-Leiste 3a ist eine Fingerleiste 3 mit einer horizontalen Nut vorgesehen, durch welche ein in die Nut gelegter Finger eine Hand 9 eines Anwenders bei der Ausführung von horizontalen Wischgesten geführt wird. Ein Leuchtstreifen kann zur ortsabhängigen Ausschüttung von Lichtsignalen angesteuert werden, um die erkannten und/oder erfassten Anwendereingaben zu quittieren. Unterhalb der Fingerleiste 3 ist ein kleinerer Bildschirm 2a als Anzeigeeinheit angeordnet, auf welchem Bedienelemente 15, 16, 17, 18 repräsentierend eine Starthilfefunktion, eine Ambientelichtfunktion, eine Boost-Funktion beziehungsweise eine Funktion zur Modifikation einer Geräuschkulisse der Abgasanlage des Fortbewegungsmittels angezeigt werden. Unterhalb der Bedienelemente 15, 16, 17, 18 werden Klimaumfänge 20 dargestellt. Die Hand 9 des Anwenders nähert sich der Fingerleiste 3 bzw. der Infrarot-LED-Leiste 3a.

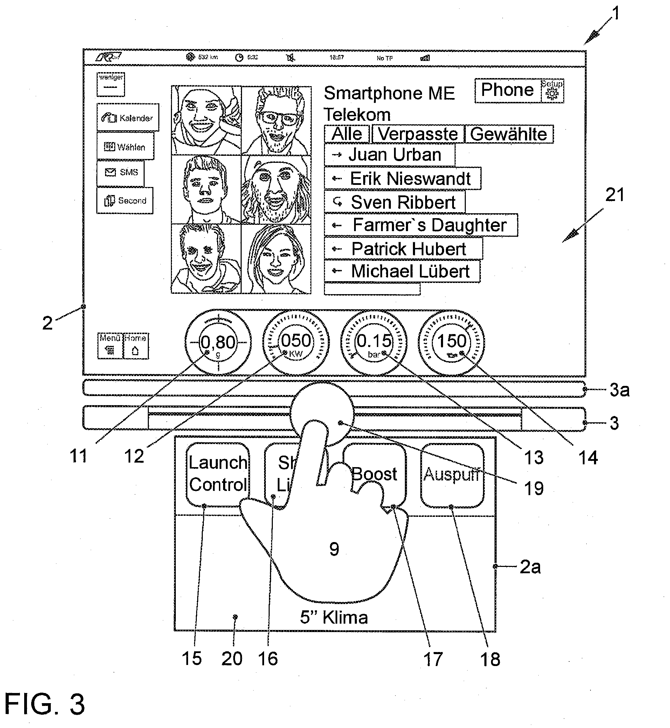

Figur 3 zeigt die in Verbindung mit Figur 2 dargestellte Situation nach dem Erreichen der Fingerleiste 3 durch die Hand 9 des Anwenders. Diese führt an der kreisförmig veranschaulichten Position 19 eine Longpress-Geste für eine vordefinierte Zeitdauer von zwei Sekunden aus.

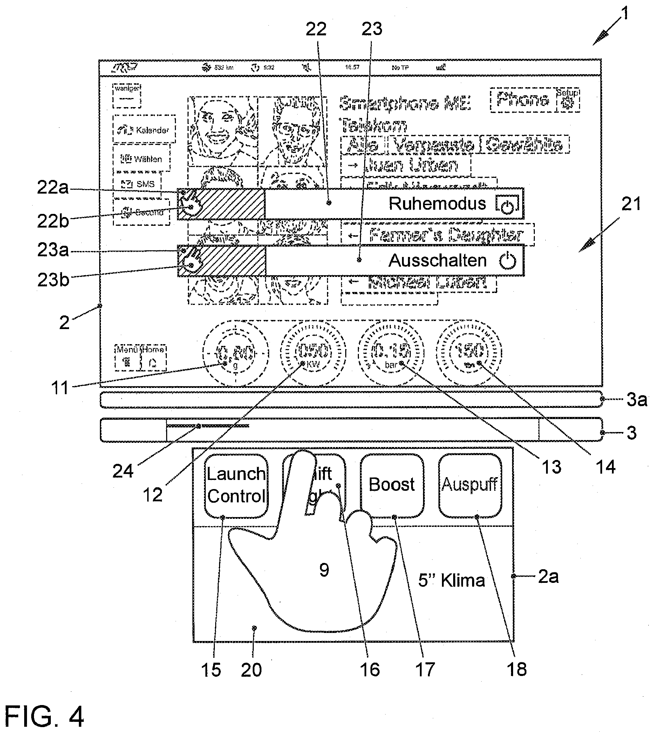

Figur 4 zeigt, wie sich die Ausführung der Longpress-Geste (siehe Figur 3) auf das Erscheinungsbild der Anwenderschnittstelle 1 ausübt. Zwei Slider 22, 23 werden horizontal und übereinander dargestellt, von welchen der obere Slider 22 zur Aktivierung eines Ruhemodus' und der untere Slider 23 zur Aktivierung eines ausgeschalteten Modus vorgesehen ist. Da bislang noch keine Interaktion bezüglich der Slider 22, 23 erfolgt ist, sind Indikatoren 22a, 23a für aktuelle Bedienposition der Slider 22, 23 in einem linken Bereich angeordnet, welcher im Wesentlichen mit einem rechten Ende eines Lichtsignals 24 auf der Fingerleiste 3 korrespondiert und den Anwender zur Eingabe einer jeweiligen Wischgeste mittels der Fingerleiste 3 einlädt. Der obere Slider 22 weist ein Piktogramm 22b einer Hand mit lediglich einem ausgestreckten Finger auf, während der Slider 23 ein Piktogramm 23b einer Hand mit zwei ausgestreckten Fingern ausweist. Der hinter den Slidern 22, 23 dargestellte Bildschirminhalt 21 sowie die Anzeigeelemente 11, 12, 13, 14 sind unscharf (englisch: "blurred") dargestellt, um den Fokus des Anwenders auf die Slider 22, 23 zu richten und die aktuelle Nicht-Bedienbarkeit der übrigen Bildschirmbestandteile zu veranschaulichen.

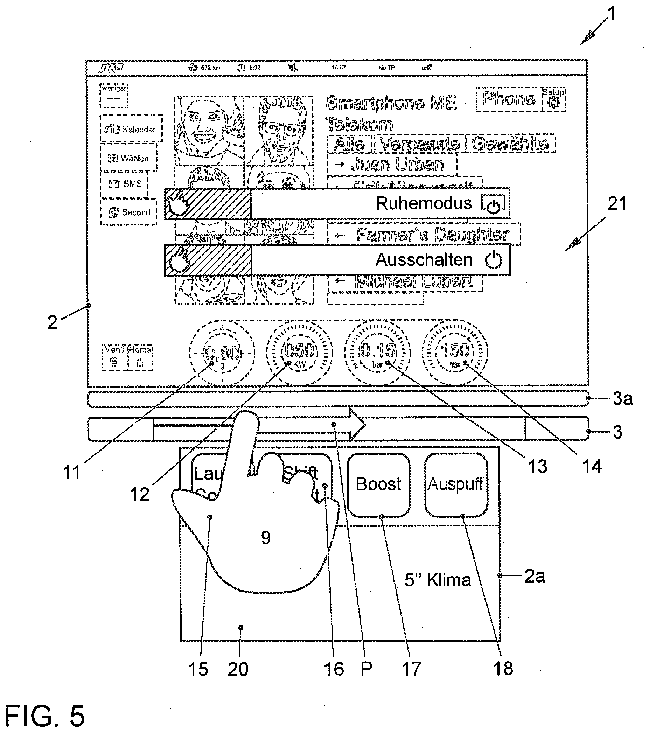

Figur 5 zeigt die Bedienung des oberen Sliders durch die Hand 9 des Anwenders mittels der Fingerleiste 3. Hierzu führt der Anwender eine Ein-Finger-Wischgeste auf der Fingerleiste 3 in Richtung eines Pfeils P aus. Indem die Fingerleiste 3 lediglich einen aufgelegten Finger erkennt, kann eine (nicht dargestellte) Auswerteeinheit die Geste einem Ruhemodus beziehungsweise dem oberen Slider 22 zuordnen.

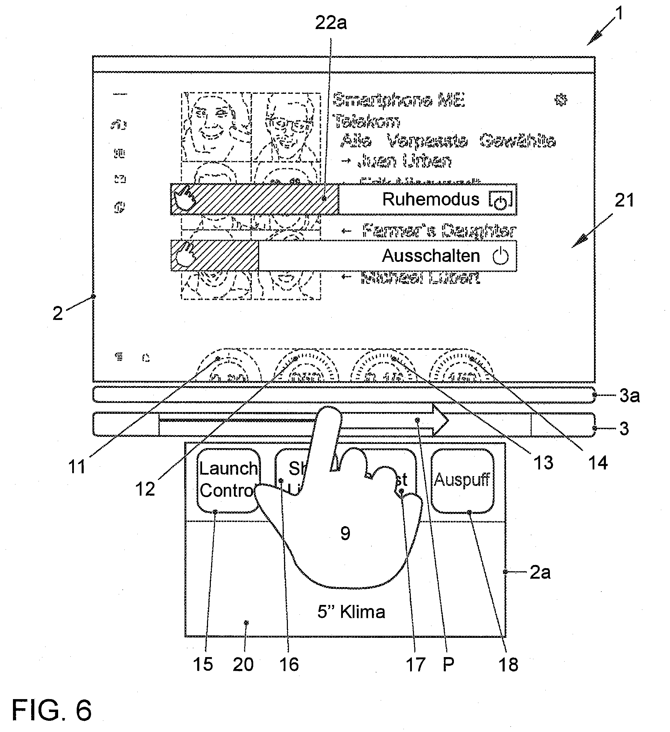

Figur 6 zeigt die in Figur 5 dargestellte Anordnung in einem fortgeschrittenen Zustand. Der Indikator 22a des Sliders 22 hat sich entsprechend dem Lichtsignal 24 und dem Finger der Hand 9 des Anwenders nach rechts bewegt. Die Anzeigeelemente 11, 12, 13, 14 auf dem oberen Bildschirm 2 werden nach unten verschoben, sodass sie in dessen unteren Rand "sinken". Zudem wird der verschwommen dargestellte Bildschirminhalt 21 zunehmend abgedunkelt.

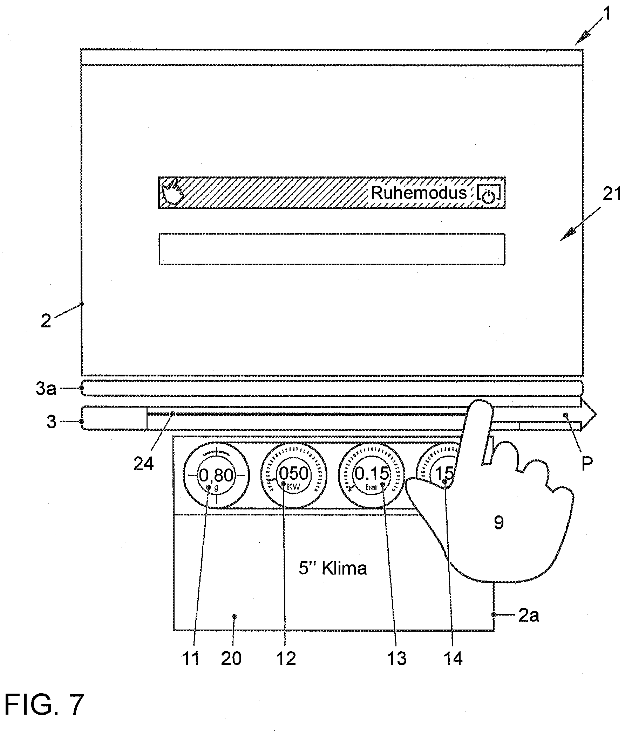

Figur 7 zeigt die in den Figuren 5 und 6 veranschaulichte Wischgeste in einem weiter fortgeschrittenen Zustand, in welchem nun der Indikator 22a den rechten Rand des Sliders 22 erreicht hat. Auch der Finger der Hand 9 des Anwenders und das Lichtsignal 24 sind nun in einem rechten Bereich der Fingerleiste 3 angelangt. Jedoch korrespondiert ihre Position im Wesentlichen mit dem rechten Rand des Sliders 22, nicht jedoch mit einem äußersten rechten Ende der Fingerleiste 3. Auf diese Weise kann eine relative Zuordnung der Position des Fingers der Hand 9 des Anwenders auf der Fingerleiste 3 den Slidern 22, 23 realisiert werden. Mit anderen Worten wird eine vordefinierte Wisch-Streckenlänge auf der Fingerleiste 3 mit einer vollständigen Bedienung des Sliders 22 bzw. 23 gleichgesetzt Die Anzeigeelemente 11, 12, 13, 14 sind nun vollständig im kleineren Bildschirm 2a angelangt. Der verschwommen dargestellte Hintergrund 21 im Bildschirm 2 ist vollständig abgedunkelt. Auch der untere Slider 23 zur Aktivierung des ausgeschalteten Modus ist kaum mehr erkennbar.

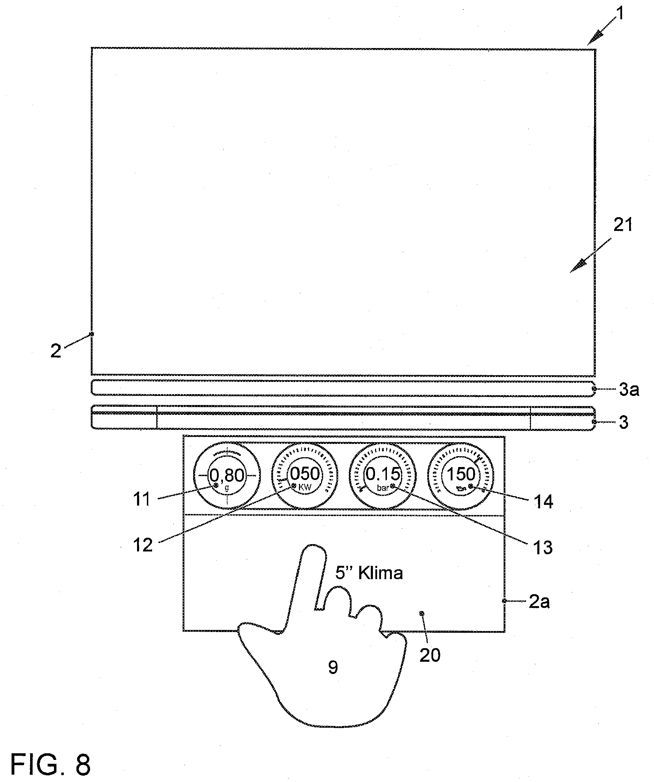

Figur 8 zeigt das Ergebnis der vorstehend beschriebenen Anwenderinteraktion nach einer Entfernung der Hand 9 von der Fingerleiste 3. Der große Bildschirm 2 zeigt keine Slider 22, 23 oder andere Inhalte mehr. Sein Backlight (deutsch: "Hintergrundbeleuchtung", nicht dargestellt) ist ausgeschaltet.

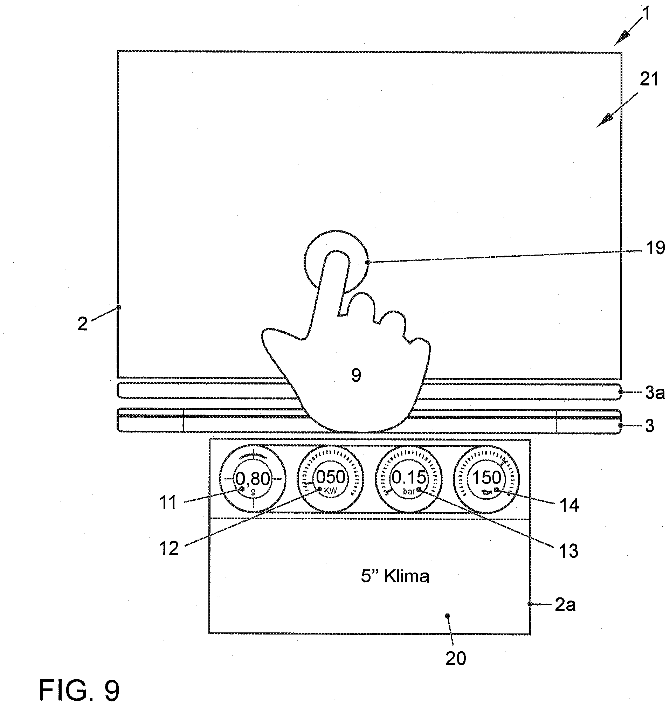

Figur 9 zeigt einen Anwenderschritt, mittels dessen die im Ruhezustand befindliche Anwenderschnittstelle 1 geweckt werde kann (der Ruhezustand wird beendet). Auf einem beliebigen Punkt der Fläche des Bildschirms 2 führt der Anwender mit einem Finger seiner Hand 9 eine Longpress-Geste (im Beispiel an der Position 19) aus. Unverzüglich wird der in Verbindung mit Figur 2 beschriebene Zustand angezeigt und auch die Anzeigeelemente 11, 12, 13, 14 überlagern nun nicht mehr die Bedienelemente 15, 16, 17, 18 auf dem kleineren Bildschirm 2a.

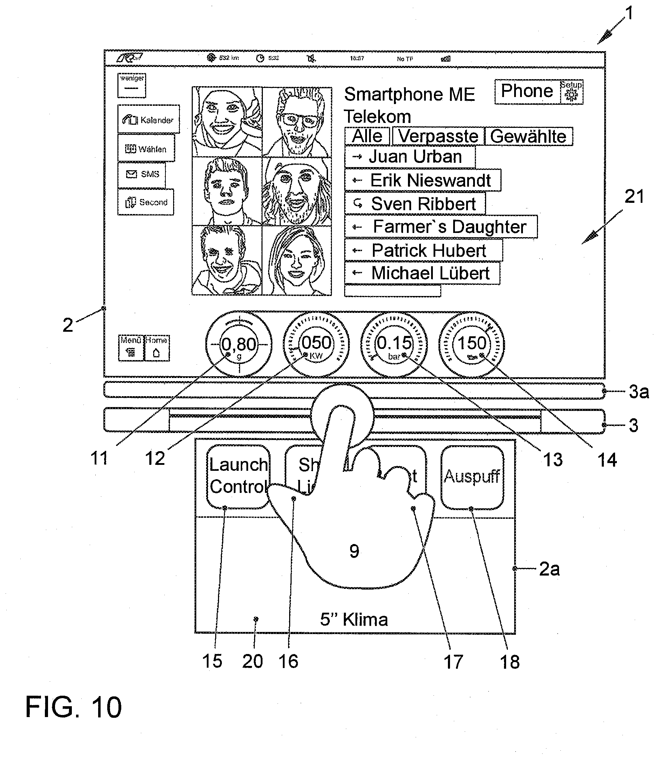

Figur 10 zeigt erneut eine Longpress-Geste des Anwenders auf der Fingerleiste 3, welche in Übereinstimmung mit einer aktuellen Einstellung einer Ambientebeleuchtung des Fortbewegungsmittels illuminiert ist.

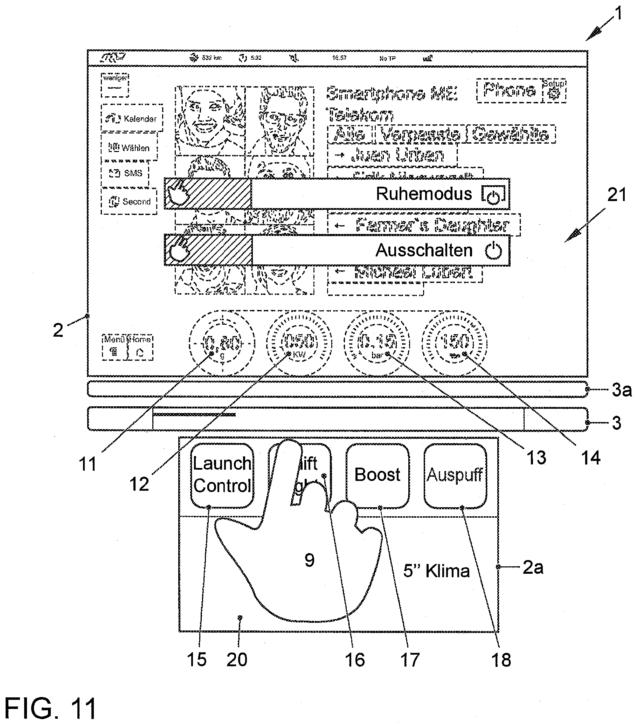

Figur 11 zeigt entsprechend Figur 4 das Ergebnis einer erfolgreich erkannten Longpress-Geste auf der Fingerleiste 3. Wieder werden die beiden Slider 22, 23 zur wahlweisen Aktivierung eines Ruhemodus' beziehungsweise eines ausgeschalteten Modus auf dem Bildschirm 2 angezeigt und der übrige Bildschirminhalt 21 ebenso wie die Anzeigeelemente 11, 12, 13, 14 verschwommen dargestellt. Das Lichtsignal 24 korrespondiert mit einer Position der Indikatoren 22a, 23a.

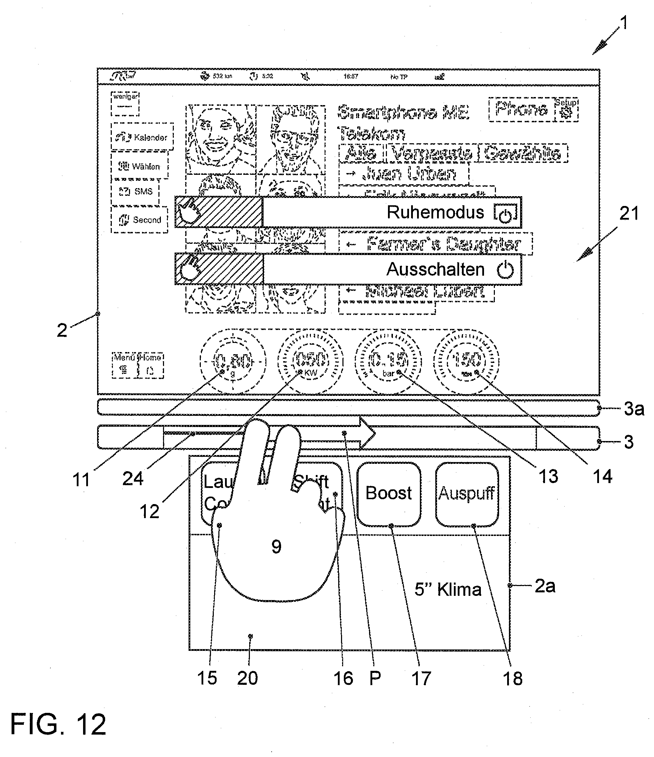

Figur 12 zeigt nun eine Wischgeste zweier Finger der Hand 9 des Anwenders auf der Fingerleiste 3 in Richtung eines Pfeils P. Indem die Fingerleiste 2 aufgelegte Finger erkennt, kann eine (nicht dargestellte) Auswerteeinheit die Wischgeste dem Slider 23 und somit einer Aktivierung eines ausgeschalteten Zustandes zuordnen.

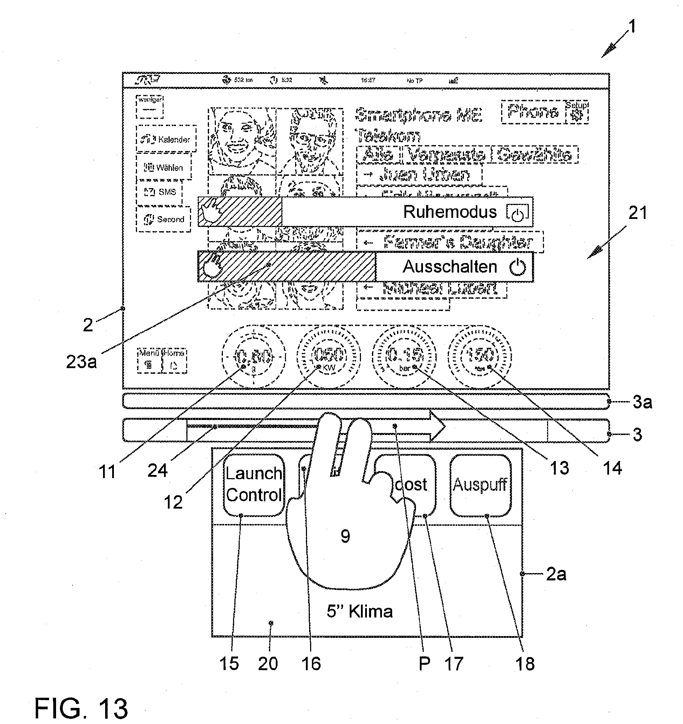

Figur 13 zeigt den in Figur 12 gezeigten Zustand bei fortgeschrittener Zwei-Finger-Wischgeste der Hand 9 des Anwenders. Der Indikator 23a des Sliders 23 befindet sich in etwa oberhalb der Hand 9 und des Lichtsignals 24 in der Mitte des Bildschirms 2. Der Bildschirmhintergrund 21 ist ebenso wie die Anzeigeelemente 11, 12, 13, 14 stark abgedunkelt. Im Unterschied zur Aktivierung eines Ruhemodus', wie er in Verbindung mit den Figuren 2 bis 8 beschrieben worden ist, sinken die Anzeigeelemente 11, 12, 13, 14 jedoch nicht in den unteren Rand des oberen Bildschirmes 2 beziehungsweise in den oberen Rand des unteren Bildschirmes 2a, sondern werden lediglich abgedunkelt.

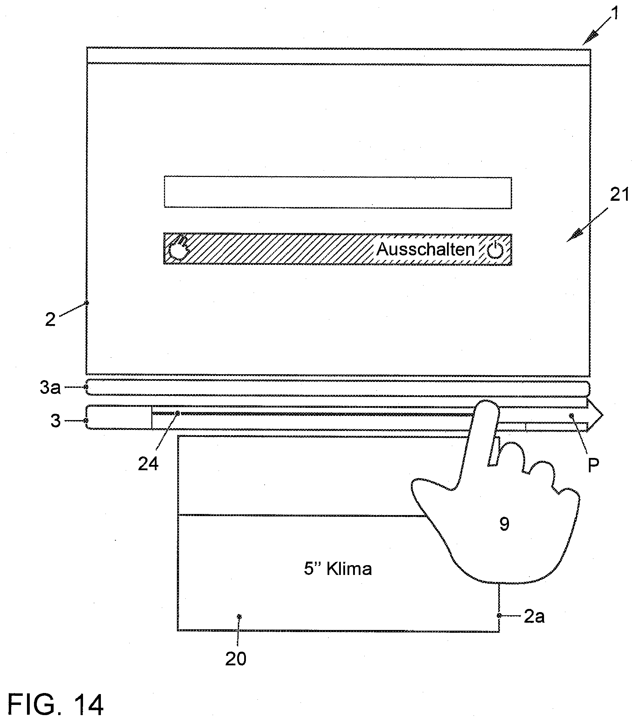

Figur 14 zeigt das Ergebnis einer vollständig ausgeführten Zwei-Finger-Geste zur Aktivierung des ausgeschalteten Modus'. Der Indikator 23a des Sliders 23 hat das rechte Ende des Sliders 23 erreicht. Der Slider 22 ist nahezu im Dunkel des Bildschirminhaltes 21 verschwunden. Die zuvor noch in der oberen Bildschirmhälfte des unteren Bildschirmes 2a angezeigten Bedienelemente 15, 16, 17, 18 sind ebenfalls in einem dunklen Streifen untergegangen. Die obere Hälfte des Backlights des unteren Bildschirms 2a ist ebenfalls ausgeschaltet, sodass lediglich die in einem unteren Bereich des Bildschirms 2a angeordneten Klimabedienumfänge 20 unverändert angezeigt werden.

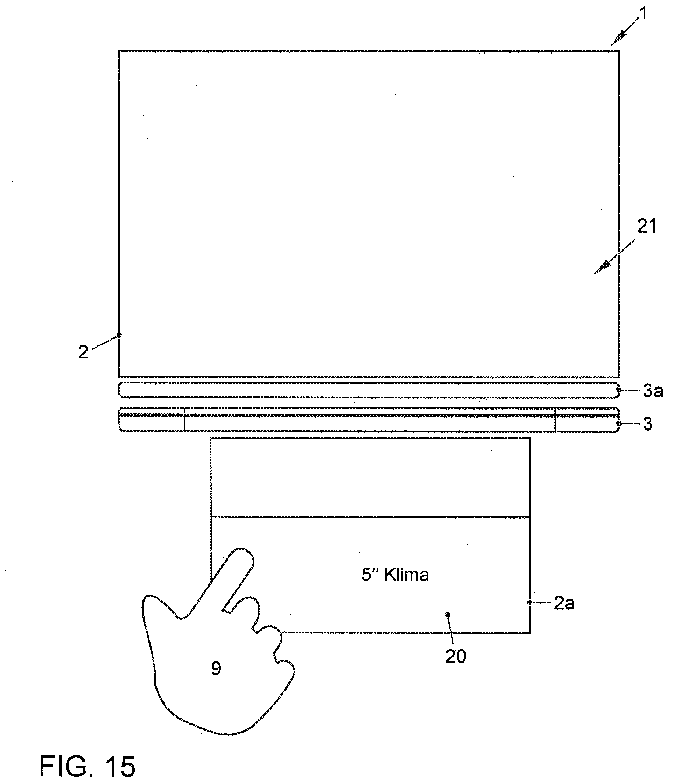

Figur 15 zeigt das Ergebnis der erfolgreich ausgeführten Zwei-Finger-Wischgeste zur Aktivierung des ausgeschalteten Zustandes. Das Backlight des oberen Bildschirms 2 ist ausgeschaltet, sodass nun auch die Slider 22, 23 vollends unsichtbar sind. Die Lichtemission des oberen Bildschirms 2 ist abgeschaltet. Entsprechendes gilt für die vormals den Bedienelementen 15, 16, 17, 18 zugeordneten Bereiche des unteren Bildschirms 2a. Lediglich die Klimabedienumfänge 21 sorgen noch für (gegenüber dem ursprünglichen Zustand erheblich reduzierte) Lichtemissionen in der Fahrgastzelle.

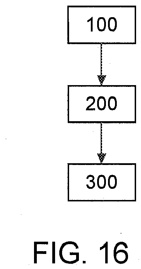

Figur 16 zeigt Schritte eines Ausführungsbeispiels eines erfindungsgemäßen Verfahrens zur Reduzierung einer Lichtemission einer Anzeigeeinrichtung eines Fortbewegungsmittels. In Schritt 100 wird eine Anwendereingabe mit einer vordefinierten Mindestdauer ("Longpress") empfangen. Die Longpress-Geste wird in diesem Beispiel in Form einer 3D-Geste frei im Raum mittels einer Annäherungssensorik in Form einer Infrarot-LED-Leiste erfasst und einer Auswerteeinheit gemeldet. In Schritt 200 wird eine vordefinierte Wischgeste in Form einer 3D-Wischgeste innerhalb eines vordefinierten Erfassungsbereiches der Infrarot-LED-Leiste erfasst. Indem auch die Signatur der Hand des Anwenders erfasst wird, kann die Infrarot-LED-Leiste die Anzahl gestreckter Finger der Hand des Anwenders auflösen und diese der Auswerteeinheit melden. In Abhängigkeit der Anzahl erkannter Finger wird im Ansprechen auf die Wischgeste in Schritt 300 ein zugeordneter Zustand reduzierter Lichtemissionen der Anzeigeeinrichtung des Fortbewegungsmittels aktiviert. Im Ergebnis sind die gesamten Lichtemissionen innerhalb der Fahrgastzelle des Fortbewegungsmittels verringert, sodass auch bei nächtlicher Fahrt die außerhalb der Fahrgastzelle existierenden Lichtsignale gut durch den Führer des Fortbewegungsmittels erfasst werden können.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: großer Bildschirm
- 2a: kleiner Bildschirm
- 3: Fingerleiste/Erfassungseinheit
- 3a: Infrarot-LED-Leiste/Erfassungseinheit
- 4: elektronisches Steuergerät
- 5: Datenspeicher
- 6: Lautsprecher
- 7a, 7b: Ambientelichtleiste
- 8a: Fahrersitz
- 8b: Beifahrersitz
- 9: Hand des Anwenders
- 10: PKW
- 11 - 14: Anzeigeelemente
- 15 - 18: Bedienelemente
- 19: Eingabeposition
- 20: Heiz-/Klimaumfänge
- 21: Bildschirminhalt des Bildschirms 2
- 22, 23: Slider
- 22a, 23a: Indikator
- 22b, 23b: Piktogramm
- 24: Lichtsignal
- 100 - 300: Verfahrensschritte
- P: Pfeil

## Patentansprüche

1. Verfahren zur Reduzierung einer Lichtemission einer Anzeigeeinrichtung (2, 2a) eines Fortbewegungsmittels (10) umfassend die Schritte:
- Empfangen (100) und Erkennen einer "Longpress-Geste", also einer Anwendereingabe mit einer vordefinierten Mindestdauer, mittels einer Fingerleiste (3) in Form einer länglichen Führungsmulde zur Eingabe von Wischgesten, zeitlich darauffolgend
- Anzeigen eines ersten Hinweises (22, 22b) über eine Zuordnung zwischen einer ersten Wischgeste und einem ersten Zustand reduzierter Lichtemission, und
- Anzeigen eines zweiten Hinweises (23, 23b) über eine Zuordnung zwischen einer zweiten Wischgeste und einem zweiten Zustand reduzierter Lichtemission,
wobei der erste Hinweis (22, 22b) auf eine Ein-Finger-Wischgeste und der zweite Hinweis (23, 23b) auf eine Mehr-Finger-Wischgeste hinweisen, zeitlich darauffolgend
- Empfangen (200) einer vordefinierten Wischgeste, wobei eine Art der Wischgeste eine Ein-Finger-Wischgeste oder eine Mehr-Finger-Wischgeste ist, und im Ansprechen auf die Kombination der vorgenannten Schritte sowie in Abhängigkeit der Art der Wischgeste
- Reduzieren (300) der Lichtemission der Anzeigeeinrichtung (2, 2a) des Fortbewegungsmittels (10) auf einen ersten Zustand bzw. einen zweiten Zustand reduzierter Lichtemission.

2. Verfahren nach Anspruch 1, wobei auch die Wischgeste mittels der Fingerleiste (3) empfangen wird.

3. Anwenderschnittstelle zur Reduzierung einer Lichtemission einer Anzeigeeinheit (2, 2a) eines Fortbewegungsmittels (10) umfassend:
- eine Erfassungseinrichtung (3, 3a) zur Erfassung von Anwendereingaben
- eine Anzeigeeinheit (2, 2a), und
- eine Auswerteeinheit (4), wobei
- die Auswerteeinheit (4) eingerichtet ist,
- eine mittels der Erfassungseinrichtung (3, 3a) erfasste "Longpress-Geste", also eine Anwendereingabe mit einer vordefinierten Mindestdauer zu erkennen, wobei die Auswerteeinheit (4) weiter eingerichtet ist, im Ansprechen auf die Longpress-Geste
- einen ersten Hinweis (22, 22b) über eine Zuordnung zwischen einer ersten Wischgeste und einem ersten Zustand reduzierter Lichtemission anzuzeigen, und
- einen zweiten Hinweis (23, 23b) über eine Zuordnung zwischen einer zweiten Wischgeste und einem zweiten Zustand reduzierter Lichtemission anzuzeigen, wobei der erste Hinweis (22, 22b) auf eine Ein-Finger-Wischgeste und der zweite Hinweis (23, 23b) auf eine Mehr-Finger-Wischgeste hinweisen, zeitlich darauffolgend
- eine mittels der Erfassungseinrichtung (3, 3a) erfasste Wischgeste zu erkennen, wobei eine Art der Wischgeste eine Ein-Finger-Wischgeste oder eine Mehr-Finger-Wischgeste ist und im Ansprechen auf die Kombination beider vorgenannter Schritte sowie in Abhängigkeit der Art der Wischgeste
- eine Lichtemission der Anzeigeeinheit (2, 2a) des Fortbewegungsmittels (10) auf einen ersten Zustand bzw. einen zweiten Zustand reduzierter Lichtemission zu reduzieren, wobei die Erfassungseinrichtung (3, 3a) eine Fingerleiste in Form einer länglichen Führungsmulde zur Erfassung von Longpress-Gesten und/oder Wischgesten ist.

4. Anwenderschnittstelle nach Anspruch 3, wobei die Lichtemissionen durch Aktivieren eines Ruhezustandes oder eines ausgeschalteten Zustandes der Anzeigeeinheit (2) und/oder einer zweiten Anzeigeeinheit (2a) reduziert werden.

5. Anwenderschnittstelle nach einem der Ansprüche 3 oder 4, wobei
- im Ansprechen auf eine erste vordefinierte Wischgeste ein Ruhezustand und
- im Ansprechen auf eine zweite vordefinierte Wischgeste ein ausgeschalteter Zustand aktiviert wird.

6. Anwenderschnittstelle nach einem der Ansprüche 3 bis 5, wobei
- der erste Hinweis (22, 22b) und/oder der zweite Hinweis (23, 23b) ein auf der Anzeigeeinheit (2) angezeigtes Verschiebeelement (22, 23), nachfolgend "Slider" genannt, umfasst.

7. Anwenderschnittstelle nach einem der Ansprüche 3 bis 6, wobei die Auswerteeinheit (4) weiter eingerichtet ist,
- im Ansprechen auf eine Ein-Finger-Wischgeste eine erste Animation bezüglich eines ersten dargestellten Sliders (22) anzuzeigen, und
- im Ansprechen auf eine Mehr-Finger-Wischgeste eine zweite Animation bezüglich eines zweiten dargestellten Sliders (23) anzuzeigen

8. Computerprogrammprodukt umfassend Instruktionen, welche, wenn sie auf einer Auswerteeinheit (4) einer Anwenderschnittstelle (1) nach einem der Ansprüche 3 bis 7 ausgeführt werden, die Auswerteeinheit (4) veranlassen, die Schritte eines Verfahrens nach einem die Ansprüche 1 und 2 durchzuführen.

9. Datenträgersignal repräsentierend Instruktionen, welche, wenn sie auf einer Auswerteeinheit (4) einer Anwenderschnittstelle (1) nach einem der Ansprüche 3 bis 7 ausgeführt werden, die Auswerteeinheit (4) veranlassen, die Schritte eines Verfahrens nach einem die Ansprüche 1 und 2 durchzuführen.

10. Fortbewegungsmittel umfassend eine Anwenderschnittstelle (1) nach einem der Ansprüche 3 bis 7.

## Claims

1. Method for reducing a light emission from a display device (2, 2a) of a means of transportation (10), comprising the steps of:
- receiving (100) and detecting a "long-press gesture", that is to say a user input of a predefined minimum duration, by means of a finger bar (3) in the form of an elongate guiding depression for inputting swipe gestures, and temporally thereafter
- displaying a first indication (22, 22b) relating to an association between a first swipe gesture and a first state of reduced light emission, and
- displaying a second indication (23, 23b) relating to an association between a second swipe gesture and a second state of reduced light emission,
wherein the first indication (22, 22b) indicates a one-finger swipe gesture and the second indication (23, 23b) indicates a multi-finger swipe gesture, and temporally thereafter
- receiving (200) a predefined swipe gesture, wherein a type of the swipe gesture is a one-finger swipe gesture or a multi-finger swipe gesture and, as a reaction to the combination of the aforementioned steps and in dependence on the type of the swipe gesture
- reducing (300) the light emission from the display device (2, 2a) of the means of transportation (10) to a first state or to a second state of reduced light emission.

2. Method according to Claim 1, where the swipe gesture is also received via the finger bar (3).

3. User interface for reducing a light emission from a display unit (2, 2a) of a means of transportation (10), comprising:
- a capturing device (3, 3a) for capturing user inputs
- a display unit (2, 2a), and
- an evaluation unit (4), wherein
- the evaluation unit (4) is configured to
- detect a "long-press gesture" captured by means of the capturing device (3, 3a), that is to say a user input of a predefined minimum duration, wherein the evaluation unit (4) is further configured, as a reaction to the long-press gesture, to
- indicate a first indication (22, 22b) relating to an association between a first swipe gesture and a first state of reduced light emission, and
- indicate a second indication (23, 23b) relating to an association between a second swipe gesture and a second state of reduced light emission, wherein the first indication (22, 22b) indicates a one-finger swipe gesture and the second indication (23, 23b) indicates a multi-finger swipe gesture, and temporally thereafter
- to detect a swipe gesture detected by means of the capturing device (3, 3a), wherein a type of the swipe gesture is a one-finger swipe gesture or a multi-finger swipe gesture and, as a reaction to the combination of both aforementioned steps and in dependence on the type of the swipe gesture
- to reduce a light emission of the display unit (2, 2a) of the means of transportation (10) to a first state or a second state of reduced light emission, wherein the capturing device (3, 3a) is a finger bar in the form of an elongate guiding depression for capturing long-press gestures and/or swipe gestures.

4. User interface according to Claim 3, wherein the light emissions are reduced by activating a standby state or a switched-off state of the display unit (2) and/or of a second display unit (2a).

5. User interface according to either of Claims 3 and 4, wherein
- as a reaction to a first predefined swipe gesture, a standby state is activated, and
- as a reaction to a second predefined swipe gesture, a switched-off state is activated.

6. User interface according to one of Claims 3 to 5, wherein
- the first indication (22, 22b) and/or the second indication (23, 23b) comprises a sliding element (22, 23) displayed on the display unit (2), hereinafter referred to as a "slider".

7. User interface according to one of Claims 3 to 6, wherein the evaluation unit (4) is further configured,
- as a reaction to a one-finger swipe gesture, to display a first animation relating to a first presented slider (22), and
- as a reaction to a multi-finger swipe gesture, to display a second animation relating to a second presented slider (23).

8. Computer program product, comprising instructions that, when they are executed on an evaluation unit (4) of a user interface (1) according to one of Claims 3 to 7, cause the evaluation unit (4) to carry out the steps of a method according to one of Claims 1 and 2.

9. Data carrier signal, representing instructions that, when they are executed on an evaluation unit (4) of a user interface (1) according to one of Claims 3 to 7, cause the evaluation unit (4) to carry out the steps of a method according to one of Claims 1 and 2.

10. Means of transportation, comprising a user interface (1) according to one of Claims 3 to 7.

## Revendications

1. Procédé de réduction d'une émission lumineuse d'un dispositif d'affichage (2, 2a) d'un moyen de transport (10), comprenant les étapes suivantes :
- la réception (100) et reconnaissance d'un « geste de pression prolongée », c'est-à-dire d'une saisie d'utilisateur ayant une durée minimale prédéfinie, au moyen d'une baguette tactile (3) sous la forme d'un enfoncement de guidage longitudinal servant à la saisie de gestes de balayage, et suivie chronologiquement par
- l'affichage d'une première notification (22, 22b) à propos d'une association entre un premier geste de balayage et un premier état d'émission lumineuse réduite, et
- l'affichage d'une deuxième notification (23, 23b) à propos d'une association entre un deuxième geste de balayage et un deuxième état d'émission lumineuse réduite,
la première notification (22, 22b) indiquant un geste de balayage à un doigt et la deuxième notification (23, 23b) indiquant un geste de balayage à plusieurs doigts, suivi chronologiquement par
- la réception (200) d'un geste de balayage prédéfini, la nature du geste de balayage étant un geste de balayage à un doigt ou un geste de balayage à plusieurs doigts et, en réaction à la combinaison des étapes susmentionnées ainsi qu'en fonction de la nature du geste de balayage
- la réduction (300) de l'émission lumineuse du dispositif d'affichage (2, 2a) du moyen de transport (10) à un premier état ou un deuxième état d'émission lumineuse réduite.

2. Procédé selon la revendication 1, les gestes de balayage étant également reçus au moyen de la baguette tactile (3).

3. Interface utilisateur servant à la réduction d'une émission lumineuse d'un dispositif d'affichage (2, 2a) d'un moyen de transport (10), comprenant :
- un dispositif d'acquisition (3, 3a) destiné à acquérir des saisies d'utilisateur,
- une unité d'affichage (2, 2a), et
- une unité d'interprétation (4),
- l'unité d'interprétation (4) étant conçue pour
- reconnaître un « geste de pression prolongée », c'est-à-dire une saisie d'utilisateur ayant une durée minimale prédéfinie, acquis au moyen du dispositif d'acquisition (3, 3a), l'unité d'interprétation (4) étant en outre conçue pour, en réaction au geste de pression prolongée
- afficher une première notification (22, 22b) à propos d'une association entre un premier geste de balayage et un premier état d'émission lumineuse réduite, et
- afficher une deuxième notification (23, 23b) à propos d'une association entre un deuxième geste de balayage et un deuxième état d'émission lumineuse réduite, la première notification (22, 22b) indiquant un geste de balayage à un doigt et la deuxième notification (23, 23b) indiquant un geste de balayage à plusieurs doigts, ensuite chronologiquement
- reconnaître un geste de balayage acquis au moyen du dispositif d'acquisition (3, 3a), une nature du geste de balayage étant un geste de balayage à un doigt ou un geste de balayage à plusieurs doigts et, en réaction à la combinaison des deux étapes susmentionnées ainsi qu'en fonction de la nature du geste de balayage
- réduire une émission lumineuse du dispositif d'affichage (2, 2a) du moyen de transport (10) à un premier état ou un deuxième état d'émission lumineuse réduite, le dispositif d'acquisition (3, 3a) étant une baguette tactile sous la forme d'un enfoncement de guidage longitudinal servant à l'acquisition de gestes de pression prolongée et/ou de gestes de balayage.

4. Interface utilisateur selon la revendication 3, les émissions lumineuses étant réduites par activation d'un état de repos ou d'un état hors tension du dispositif d'affichage (2) et/ou d'un deuxième dispositif d'affichage (2a).

5. Interface utilisateur selon l'une des revendications 3 et 4,
- un état de repos étant activé en réaction à un premier geste de balayage prédéfini et
- un état hors tension étant en réaction à un deuxième geste de balayage prédéfini.

6. Interface utilisateur selon l'une des revendications 3 à 5,
- la première notification (22, 22b) et/ou la deuxième notification (23, 23b) comprenant un élément coulissant (22, 23), appelé ci-après « curseur », affiché sur l'unité d'affichage (2).

7. Interface utilisateur selon l'une des revendications 3 à 6, l'unité d'interprétation (4) étant en outre conçue pour
- en réaction à un geste de balayage à un doigt, afficher une première animation concernant un premier curseur (22) représenté, et
- en réaction à un geste de balayage à plusieurs doigts, afficher une deuxième animation concernant un deuxième curseur (23) représenté.

8. Produit de programme informatique comprenant des instructions qui, lorsqu'elles sont exécutées sur une unité d'interprétation (4) d'une interface utilisateur (1) selon l'une des revendications 3 à 7, amènent l'unité d'interprétation (4) à mettre en œuvre les étapes d'un procédé selon l'une des revendications 1 et 2.

9. Instructions représentant un signal porteur de données qui, lorsqu'elles sont exécutées sur une unité d'interprétation (4) d'une interface utilisateur (1) selon l'une des revendications 3 à 7, amènent l'unité d'interprétation (4) à mettre en œuvre les étapes d'un procédé selon l'une des revendications 1 et 2.

10. Moyen de transport comprenant une interface utilisateur (1) selon l'une des revendications 3 à 7.
